# EUROPEAN PATENT SPECIFICATION

(11) **EP 1 093 442 B1**
(45) Date of publication and mention of the grant of the patent: **11.12.2002**
(21) Application number: 99930786.1
(22) Date of filing: 24.06.1999
(51) Int. Cl.: C03B 3/00, C03B 5/04

(54) **MELTING FURNACE HAVING CULLET PREHEATING AND REAR CROWN VENT WITH SUPPORT SYSTEM**
SCHMELZOFEN MIT SCHERBENVORHEIZUNG UND HINTER-FIRST-SCHORNSTEIN MIT UNTERSTÜTZUNGSSYSTEM
FOUR DE FUSION A PRECHAUFFAGE DE CALCIN ET A VENTILATION DE VOUTE ARRIERE AVEC SYSTEME DE SUPPORT

(30) Priority: 29.06.1998 US 106672
(43) Date of publication of application: 25.04.2001
(73) Proprietor: OWENS CORNING, Toledo, Ohio 43659 (US)
(72) Inventor: PLOETZ, Lawrence, Cwmbran NP4 4GHS (GB)
(74) Representative: West, Alan Harry
(86) International application number: US9914578
(87) International publication number: WO00000440

(56) References cited:
- GB-A- 2 027 690
- US-A- 2 118 799
- US-A- 4 432 780

## Description

This invention relates in general to glass manufacture, and in particular, to a glass melting furnace with a cullet preheating system and a rear crown vent with an independent steel support system for optimizing the fuel usage while allowing for the oxidation of scrap glass and the removal of pollutants from exhaust gases.

Glass manufacture involves the mixing of various batch ingredients, generally including silica sand, dry powders, granular oxides, carbonates, and other raw materials (depending on the desired glass type) and heating them to a temperature of about 2730° F. (1500° C.), where they become molten and acquire a homogeneous nature. During the melting of the batch from which the liquid glass is formed, various hot gases are formed which are vented from the furnace. As a heat conservation measure, these gases have been vented from a crown at the rearward portion of the furnace and passed through a recuperator for recovery of heat. Substantial quantities of heat are required for the melting process, generally supplied by combustion of fossil fuels. In a typical glass melting furnace, the heat supplied to the melt is provided predominantly by natural gas mixed with preheated combustion air. The resultant flame fires over the melt and heat transfer to the melt is by radiation from the flame and furnace enclosure. In addition, some furnaces augment the heat with an electric boost. The major attraction of an electric boost is that it allows an increase in production from an existing furnace by providing an additional heat source to the melt.

A method of increasing the amount of heat that can be added to a furnace while avoiding the high operating cost of an electric boost is to preheat the feedstock - i.e. the glass batch constituents and cullet. Cullet is broken pieces of glass that are added to the other batch ingredients and charged to the melting fumace. A certain minimum proportion of the total batch is required to be cullet in order to provide proper melting characteristics, generally in the range of 10-20% by weight. Cullet normally used for this purpose is generated with the glass factory, either from product breakage during the manufacturing process, or from dumping of molten glass during product changes. Recent emphasis on waste recycling has resulted in the collection of large quantities of what is called ecological cullet. This is generally glass bottles returned to recycling centers. With proper processing such as sorting by color, removing foreign substances and crushing to smaller sized pieces, ecological cullet can be made suitable for remelting into new glass. Currently there are a number of glass factories with glass melting furnaces where about 80-90% of the batch feed material is ecological cullet.
As cullet use increases, cullet preheating offers an important alternative to an electric boost. Furthermore, due to furnace economics and state legislation encouraging the recycling of scrap glass, cullet use will very likely increase in the near future to the point where it may be the predominant feedstock in container furnaces in many parts of the country. At present, the maximum amount of glass that can be pulled from an existing furnace is limited by the amount of energy that can be put into the furnace to melt the feedstock. This limit is reached when the furnace is at high fire resulting in maximum flow of the products of combustion. However, additional energy can be put into the furnace by preheating the cullet so as to provide a more productive and efficient glass manufacturing process. Using a cullet preheater, it is desirable to heat the cullet to a temperature just below that at which it begins to become sticky and agglomerates. Tests have shown that with preheater inlet gas temperature of 1650° F. (899° C.), the cullet can be heated to 1100° F. (593° C.) which is ideal. For example, for a furnace running on feedstock which is 70% by weight cullet, preheating cullet to a temperature of about 1100° F. (593° C.) (a temperature just below that at which it begins to become sticky and agglomerates) can provide a productivity increase of as much as 30%.

Because of the relatively poor heat transfer from the hot combustion gases to the pool of molten glass, exhaust gas temperatures from the process are usually quite high in spite of various types of heat recovery equipment employed. In addition, pollutants of various types are emitted from the melting process along with the exhaust gases. Thus, the glass industry is in need of a simple, cost-effective system in which it can increase the productivity of glass melting furnaces by preheating its cullet feedstock prior to the melting process while simultaneously removing the pollutants from the melting furnace exhaust gases and reducing scrap glass from the melting process.

U.S. Patent 4,432,780 describes a procedure whereby chemically coated glass scrap is reclaimed. In that method the scrap is in the form of glass fibers which are introduced in discreet form in an oxidising gas stream into the oxidising atmosphere above the glass line of a hydrocarbon fuel-fired glass melting furnace. At least some of the glass fibers are melted by such a manner of introduction and their chemical coating is oxidised and the unmelted portion of the fibers is melted with the glass batch as it moves through the furnace. Although such a procedure may be satisfactory for scrap in the form of glass fibers, it will not be adequate for more substantial scrap such as cullet which cannot be blown into the furnace and which cannot as a consequence absorb heat in an efficient manner from the hot exhaust gases.

The present invention seeks to provide apparatus which incorporates a cullet preheating system which enables organic impurities to be reduced.

In accordance with the invention, there is provided an apparatus for the melting of glass making material comprising:
a receptacle for containing molten glass up to a glass line, the receptacle including a bottom wall, a rear end wall, a front end wall and side walls;
means including a port for introducing glass cullet and scrap glass incorporating organic impurities onto the molten glass in a first region of the receptacle adjacent the rear end wall which means includes also a shelf located on the rear end wall and extending horizontally into the receptacle below the port and above the glass line for containing glass cullet and scrap glass introduced through the port;
a throat for removing molten glass from a second region of the receptacle adjacent the front end wall;
at least one fuel/oxygen burner located in a side wall of the receptacle above the glass line for heating glass making material in the receptacle;
a crown covering the receptacle and defining a space above the glass line; and
a crown vent for venting exhaust gas from the fuel/oxygen burner from the space defined by the crown, the crown vent being vertically oriented from the crown within the first region of the receptacle,
whereby, in use, exhaust gases from the fuel/oxygen burner pass across and thereby preheat the glass cullet and scrap glass contained on the shelf and burn off the organic impurities before being vented by the crown vent.

In a preferred aspect, the crown vent includes a first section, a second section disposed above the first section, and a support ring disposed between the first and second sections for independently supporting the second section.

The invention is described below in greater detail by way of example only with reference to the accompanying drawings, in which:
Figure 1 is a side elevational view in cross section of the melting furnace according to a preferred embodiment of the invention;
Figure 2 is a top plan view of the melting furnace of Figure 1 showing the feeder screws and ports for the glass batch and for the cullet and glass scrap;

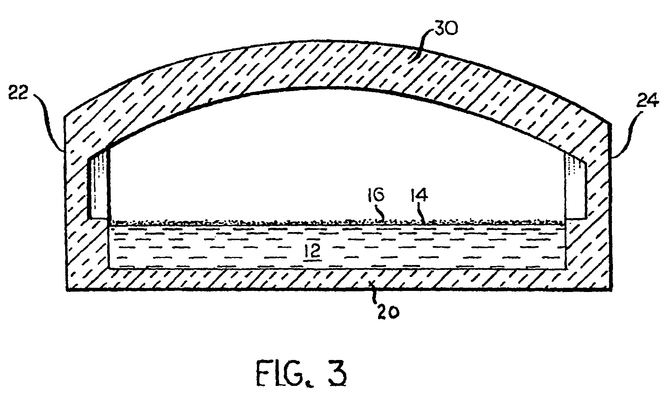

Figure 3 is a cross-sectional view of the melting furnace taken along line 3-3 of Figure 2;

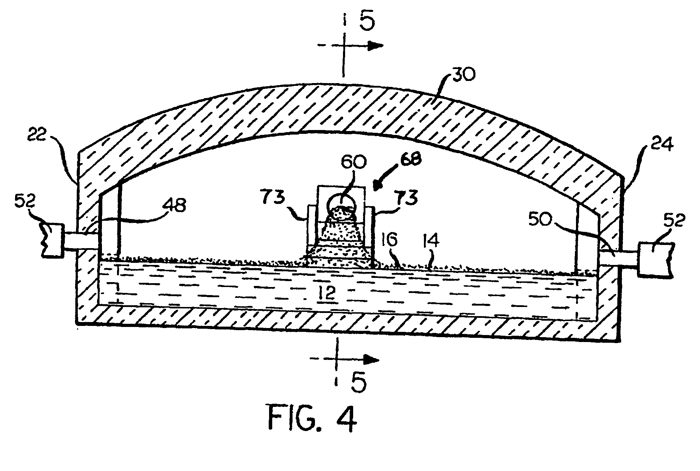

Figure 4 is a cross-sectional view of the melting furnace taken along line 4-4 of Figure 2; and
Figure 5 is a side elevational view showing the feeder screw and port for the cutlet and scrap glass and the crown vent located at the rear end of the melting furnace, and an independent support system for the crown vent according to the preferred embodiment of the invention.

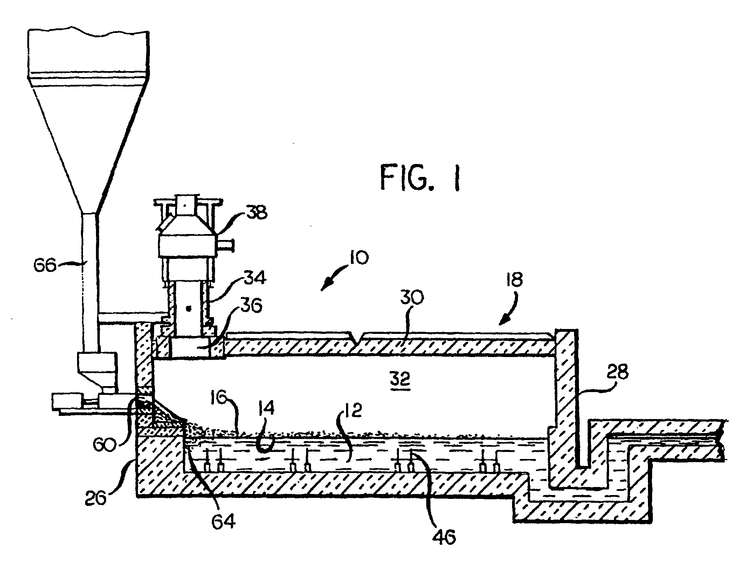

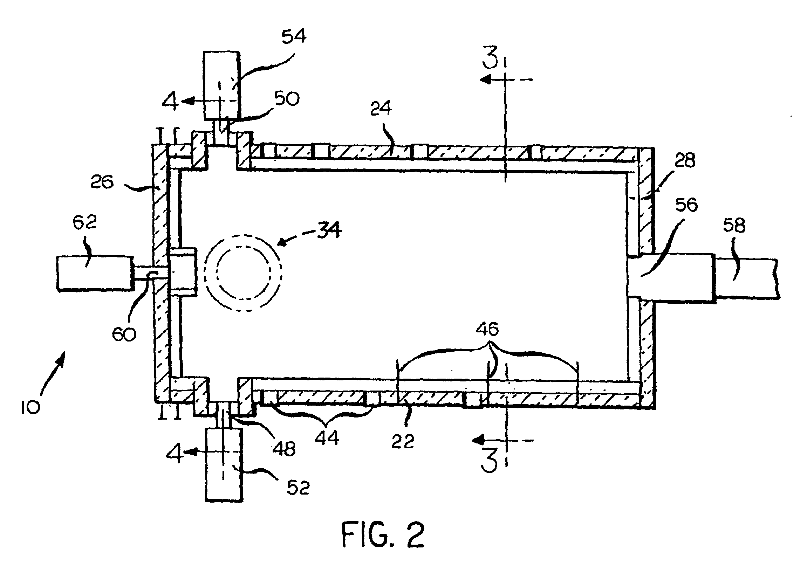

As shown in Figures 1 and 2, a furnace 10 for melting glass comprises a receptacle for containing molten glass 12 up to a glass line 14 and glass batch 16 above at least a portion of that glass line 14. The receptacle is illustrated as a tank portion 18 including a bottom wall 20, side walls 22 and 24, rear end wall 26, and front end wall 28. The side walls 22, 24 support an arch roof or refractory crown 30 above the tank portion 18 and the glass line 14 to enclose a space 32 above the molten glass 12. A crown vent 34 is located at a rear end or first region of the furnace 10 for allowing gases to pass through a flue port 36 and a stack 38 and into the atmosphere after being treated to protect the environment. The rear crown vent 34 is discussed in more detail below. The furnace 10 includes a plurality of burners 44 distributed over the furnace 10 in a suitable manner for providing a means to heat the furnace 10. In the preferred embodiment, the burners 44 use a mixture of oxygen and natural gas to heat the furnace 10.

The furnace 10 may also include an array of electrodes 46 distributed over the furnace 10 in a suitable manner for providing Joule effect heating of the molten glass 12. Typically, the electrodes 46 are paired in ranks along the furnace length with an outer electrode on one side of the center line connected to an inner electrode on the other side of the center line. Three phase alternating current is utilized as the electrical power with like phases in each rank of electrodes. Electrical boosting, if used at all, may be controlled through the physical rotation of the secondary winding in the transformer (not shown) varying the number of secondary turns, and therefore, the secondary voltage or through the control of the current. Control of the current with direct current suppression is by any convenient means such as phase controlled firing of back to back SCRs (not shown) or time proportional control through suitable gating means. Other arrangements of electrodes can also be used, as will be appreciated by those skilled in the art.

Batch material comprising raw materials are introduced into the rear portion or first region of the furnace 10 through ports 48 and 50 located in the side walls 22 and 24, respectively, by using respective screw feeders 52 and 54 having an elevation above the plant floor such that the batch material is introduced slightly above the glass line 14, typically about 4 to 8 inches above the glass line 14. For protection from the heat of the furnace 10, the screw feeders 52 and 54 are preferably recessed into the side walls 22 and 24, respectively.

The batch material is fed into the rear portion or first region of the furnace 10 at such a rate as to form and maintain a blanket of glass batch 16 on the surface of the molten glass 12. This blanket extends over essentially the rear two-thirds of the molten glass surface, floating on the molten glass 12 and uniformly distributed upon it by temperature profiling using the gas/oxygen profile distribution between the various oxygen/fuel burners 44. This batch blanket layer is helped to be held back, allowing for a better melting dwell time, by the rear cold cullet pile which acts as a heat sink to keep the rear of the furnace 10 colder than the front of the furnace 10, assisting in establishing the well known heat hump and the thermal wheel or roll cells thereby developed. This aids greatly in the melting efficiency of the furnace 10. Glass currents in the molten glass 12 and the progressive advance of the batch material from the screw feeders 52, 54 develop a flow of glass batch from the rear portion or first region toward a front portion or second region of the furnace 10. The molten glass 12 is drawn from the front end wall 28 through a throat 56 in the front end wall 28, and passed along channel 58 to a forehearth (not shown) from which it is utilized in forming the desired product, such as fiber glass.

Glass making material, such as cullet and scrap glass, can also be charged into the furnace 10 through a port 60 preferably located in the rear end wall 26 by using a screw feeder 62 to minimize the dusting of fine particles. A storage bin 64 may be used to provide the cullet and scrap glass material to the screw feeder 62 through a discharge outlet 66. In a manner well known in the art, the rotation ratios of screw feeders 52, 54 and screw feeder 62 can be controlled in order to properly proportion the amount of batch material and the amount of cullet and scrap glass material entering into the furnace 10, respectively. Similar to the screw feeders 52, 54, the screw feeder 62 may also be recessed into the rear end wall 26 to protect it from the heat of the furnace 10.

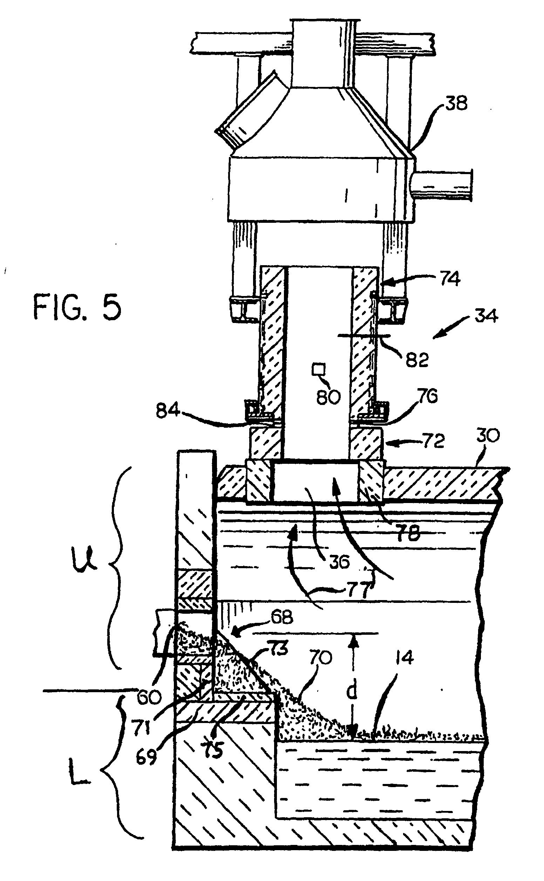

Referring now to Figure 5, the furnace 10 includes a shelf, shown generally at 68, for temporarily containing the cullet and scrap glass as they enter the furnace 10 through the port 60. The shelf 68 includes a shelf block 69 for supporting a shelf back 71 and a pair of angled side blocks 73. Preferably, the shelf block 69 extends horizontally approximately 12 to 14 inches (30.48 to 35.56 cm) into the furnace 10 such that the rear end wall 26 of the furnace 10 is vertically divided into an upper portion, U, and a lower portion, L, the upper portion, U, having a greater distance to the front end wall 28 than the lower portion, L. It should be noted that the angled side blocks 73 causes the cullet and scrap glass material to form a pile as they are introduced into the furnace 10. Preferably, the shelf block 69, the shelf back 71 and the angled side blocks 73 may be made of a well-known corrosion resistant material, such as Zirchrome 50, and the like. The shelf 68 may also include a layer 75, preferably made of AZS material and having a thickness of approximately 3 inches (7.62 cm), positioned on top of the shelf block 69 to provide additional corrosion and erosion/abrasion protection from the cullet and scrap glass being introduced into the furnace 10.

One important aspect of the invention is the elevation of the port 60 and the screw feeder 62 with respect to the glass line 14. As seen in Figure 5, the elevation of the screw feeder 60 for the cullet and scrap glass is at a much higher distance above the glass line 14 than the elevation of the screw feeders 52, 54 for the batch material. Specifically, the port 60 and the screw feeder 62 is preferably at an elevational distance, d, of about 30-42 inches (76.20 to 106.68 cm) from the centerline of the port 60 to the glass line 14, and more preferably about 36 inches (91.44 cm) above the glass line 14, as compared to a typical distance of 4 to 8 inches (10.16 to 20.32 cm) for the screw feeders 52, 54 *for* the batch material.

As mentioned earlier, the angled side blocks 73 of the shelf 68 causes the cullet and scrap glass to form a pile on the shelf 68 as they are introduced into the furnace 10. Because the port 60 and screw feeder 62 are elevated the distanced, with respect to the glass line 14, the cullet and scrap glass will form an inclined surface 70 extending from the shelf 68 to the glass line 14 when the cullet and scrap glass are introduced into the furnace 10. As a result of the formation of the inclined surface 70, the cullet and scrap glass will slowly tumble down the inclined surface 70 as additional cullet and scrap glass is being introduced into the furnace 10. As the result of this tumbling action, the scrap glass is exposed to the burners 44 so as to flash off and oxidize the binder and other organic material present on the scrap glass. Also, this tumbling action allows the cullet to have a sufficient length of time to absorb energy from the exhaust gases passing in a counter flow direction (indicated by the arrows 77 in Figure 5) into the crown vent 34.

It should be realized that the location of the port 60 and the crown vent 34 both at the rear portion or first region of the furnace 10 provide an optimum arrangement for the reclamation of the heat from the exhaust gases to preheat the cullet and for the oxidation of the binder and other organic material from the scrap glass. However, it should also be realized that the location of the port 60 and the crown vent 34 could be at any desirable location in the furnace 10 in order to optimize the reclamation of heat from the exhaust gases to preheat the cullet and to oxidize the scrap glass material.

Another important aspect of the invention is the arrangement of the crown vent 34 for the removal of exhaust gases from the combustion process of the furnace 10. As seen in Figure 5, the crown vent 34 generally includes a first or lower section 72, also known as korbeling, and a second or upper section 74, also known as a refractory stack. The korbeling 72 and refractory stack 74 is separated by a support ring 76. A crown or refractory ring 78, preferably made of refractory insulation, resides in the crown 30 and defines the flue port 36. Preferably, the korbeling 72 is mounted on the refractory ring 78. The korbeling 72 protects the support ring 76 from the heat of the exhaust gases and preferably includes about 4 courses of refractory firebrick arranged in a substantially square-shaped array having a total height of approximately 12 inches (30.48 cm). In the preferred embodiment, each course has an outside dimension of approximately 50 inches (127 cm) and an inside dimension of approximately 26 inches (66.04 cm). It should be noted that each course may be rotated approximately 90 degrees from each other to avoid joint alignment.

In the preferred embodiment, the refractory stack 74 preferably includes about 17 courses of refractory firebrick arranged in a substantially circular array having a total height of approximately 50 inches (127 cm). The refractory stack 74 has an outer diameter of approximately 44 inches (111.76 cm) and an inner diameter of approximately 26 inches (66.04 cm). The refractory stack 74 may include an opening 80 located a suitable distance above the crown 30 for allowing dampering air to enter the refractory stack 74. Preferably, the opening 80 is located approximately two-thirds of the way up the refractory stack 74 through courses 11 and 12 of the firebrick. Alternatively, the opening 80 may be eliminated and the dampering air may enter from the top of the refractory stack 74.

A temperature sensing means 82, such as a thermocouple and the like, may also be located a suitable distance above the opening 80 for measuring the temperature of the exhaust gases in the refractory stack 74. It should be understood that the temperature sensing means 82 can be located at any suitable location along the refractory stack 74 in order to provide an accurate indication of the exhaust gas temperature in the refractory stack 74. It should also be understood that the invention is not limited by the above-mentioned dimensions for the korbeling 72 and refractory stack 74, and that the invention can be practiced with any dimensions that are capable of maintaining the exhaust gas temperature above approximately 1150 °C (2100 °F).

It should be noted that the exhaust gas temperature within the refractory stack 74 is an important design consideration, especially for furnaces used to melt glass containing volatile substances, such as sodium or borate, on the surface of the glass making material. Normal use of ports, flues and stacks located adjacent to the furnace 10 may cause the refractory firebrick of the refractory stack 74 to fall below approximately 1150 °C. (2100 °F.). As a result, the sodium and borate released from the glass during the melting process may condense and form liquid slag on the refractory firebrick.

In conventional horizontally-oriented stacks, this liquid slag causes premature wear and corrosion of the refractory firebrick and needs to be periodically scraped off the refractory firebrick. On the other hand, the crown vent 34 of the invention virtually eliminates liquid slag formation on the refractory firebrick of the refractory stack 74 by allowing the burners 44 to adequately heat up the refractory firebrick to above approximately 1150 °C. (2100 °F.), while still allowing a sufficient amount of dampering air to be blown into the refractory stack 74 to maintain a slightly positive pressure into the furnace 10. Maintaining a slightly positive pressure in the furnace 10 prohibits the filtration of air into the furnace 10, thereby limiting the formation of NOₓ and increasing fuel economy.

This is accomplished by designing a vertically-oriented crown vent 34 with a very short height, preferably less than 10 ft. (3 m.), as compared with horizontally-oriented conventional stacks that are 20 ft. (6.096 m) or more in length. As a result, any slag that forms in the refractory stack 74 of the crown vent 34 of the invention drops vertically into the furnace 10 and is eventually assimilated by the molten glass 12. In addition, the thermocouple 82 located above the opening 80 for the dampering air can be used to monitor the exhaust gas temperature, and this information can be used to control the flow of dampering air to ensure that the firebrick of the refractory stack 74 is maintained above approximately 1150 °C (2100 °F) to prevent condensation of corrosion-causing volatiles. It should be noted that the dampering air may be used in conjunction with water-cooled or non water-cooled plates (not shown) located on the top of the refractory stack 74. The plates (not shown) can be used in a manner well known in the art to limit the amount of dampering air necessary to keep the refractory stack 74 in control of the pressure in the furnace 10 and the temperature in the refractory stack 74 in order to prevent the condensation of volatiles on the firebrick.

Another important aspect of the invention is the independent support system for the crown vent 34. In the preferred embodiment, this independent support system is achieved by a support ring 76 that independently supports the refractory stack 74 such that the refractory stack 74 does not rest on the korbeling 72. This configuration allows the refractory stack 74 to be repaired or completely removed while the furnace 10 is operating. The support ring 76 is preferably made of 253MA and may be cooled by any suitable fluid, such as water, in a manner well known to those skilled in the art. Preferably, the support ring 76 is mounted on an expansion ring 84 filled with a fiber blanket material that allows for the thermal expansion of the korbeling 72 and the refractory stack 74 in the vertical direction. Stack binding straps and corresponding clamps (not shown) may also be used to support the upper section 74 of the crown vent 34 in a well known manner.

As described above, the furnace 10 of the invention provides for preheating of the cullet and scrap glass by the exhaust gases and the oxidation of the organic material on the scrap glass by the burners 44 of the furnace 10. In addition, the crown vent 34 is positioned in the rear portion of the furnace 10 and the cullet is introduced into the furnace 10 at a higher elevation than conventional furnaces, thereby increasing the energy efficiency of the furnace 10. Further, the independent support system for the crown vent 34 allows for the thermal expansion of the crown vent 34 in the vertical direction and allows the refractory stack 74 to be repaired or replaced while the furnace 10 is operating, thereby also increasing efficiency of the furnace 10.

## Claims

1. An apparatus for the melting of glass making material, comprising:
a receptacle (18) for containing molten glass (12) up to a glass line (14), the receptacle including a bottom wall (20), a rear end wall (26), a front end wall (28) and side walls (22, 24);
means including a port (60) for introducing glass cullet and scrap glass incorporating organic impurities onto the molten glass in a first region of the receptacle adjacent the rear end wall which means includes also a shelf (68) located on the rear end wall and extending horizontally into the receptacle below the port (60) and above the glass line for containing glass cullet and scrap glass introduced through the port (60);
a throat (56) for removing molten glass from a second region of the receptacle adjacent the front end wall;
at least one fuel/oxygen burner (44) located in a side wall of the receptacle above the glass line for heating glass making material in the receptacle;
a crown (30) covering the receptacle and defining a space above the glass line; and
a crown vent (34) for venting exhaust gas from the fuel/oxygen burner from the space defined by the crown, the crown vent being vertically oriented from the crown within the first region of the receptacle,
whereby, in use, exhaust gases from the fuel/oxygen burner pass across and thereby preheat the glass cullet and scrap glass contained on the shelf and burn off the organic impurities before being vented by the crown vent.

2. Apparatus according to claim 1, wherein the shelf (68) divides the rear end wall (26) into an upper portion (U) and a lower portion (L), the upper portion having a greater distance to the front end wall (28) than the lower portion.

3. Apparatus according to claim 1 or claim 2, wherein the shelf (68) includes a shelf block (69) for supporting a pair of angled side blocks (73) and a shelf back (71).

4. Apparatus according to any one of claims 1 to 3, wherein the port (60) is at an elevation of 30 to 42 inches (76 to 107 cm) above the glass line.

5. Apparatus according to any one of claims 1 to 4, comprising also a feeding mechanism (48, 50) for feeding glass batch (12) into the receptacle at an elevation of 4 to 6 inches (10 to 15 cm) above the glass line (14).

6. Apparatus according to claim 5, wherein the feeding mechanism (48, 50) feeds glass batch (12) into the first region of the receptacle (18).

7. Apparatus according to any one of claims 1 to 6, wherein the crown vent (34) includes a first section (72), a second section (74) disposed above the first section, and a support ring (76) disposed between the first and second sections for independently supporting the second section.

8. Apparatus according to any one of claims 1 to 7, wherein the crown vent (34) has a height of less than 3 meters from the crown (30).

9. Apparatus according to claim 8, wherein the support ring (76) comprises 253MA metal.

10. Apparatus according to any one of claims 7 to 9, wherein the crown vent (34) further comprises an expansion ring (84) disposed between the support ring (76) and the first section, the expansion ring being filled with fiber material for allowing thermal expansion of the first section and the second section in a vertical direction.

## Patentansprüche

1. Vorrichtung zum Schmelzen von Glasmasse mit:
einem Behälter (18), der die Glasschmelze (12) bis zu einem Glaspegel (14) aufnimmt und der eine Bodenwand (20), eine hintere Stirnwand (26), eine vordere Stirnwand (28) und Seitenwände (22, 24) aufweist;
einer Einrichtung mit einer Öffnung (60) zum Einbringen von Glasscherben und Abfallglas einschließlich organischen Verunreinigungen auf die Glasschmelze in einem an die hintere Stirnwand angrenzenden ersten Behälterbereich, wobei die Einrichtung auch einen Sockel (68) aufweist, der an der hinteren Stirnwand angeordnet ist und unter der Öffnung (60) und über dem Glaspegel horizontal in den Behälter verläuft, um durch die Öffnung (60) eingeführte Glasscherben und Abfallglas aufzunehmen;
einem Auslauf (56) zur Entnahme von Glasschmelze aus einem zweiten, an die vordere Stirnwand angrenzenden Behälterbereich;
mindestens einem Brennstoff/Sauerstoff-Brenner (44), der zum Erwärmen der Glasmasse im Behälter in einer Seitenwand des Behälters oberhalb des Glaspegels angeordnet ist;
einer Decke (30), die den Behälter überdeckt und einen Raum oberhalb des Glaspegels festlegt; und
einer Deckenentlüftung (34) zum Abführen von Abgas des Brennstoff/Sauerstoff-Brenners aus dem durch die Decke festgelegten Raum, wobei die Deckenentlüftung im ersten Behälterbereich von der Decke aus in vertikaler Richtung verläuft,
wobei im Betrieb die Abgase des Brennstoff/Sauerstoff-Brenners die Glasscherben und das Abfallglas auf dem Sockel überstreichen und vorwärmen und die organischen Verunreinigungen verbrennen, bevor sie durch die Deckenentlüftung abgezogen werden.

2. Vorrichtung nach Anspruch 1, wobei der Sockel (68) die hintere Stirnwand (26) in einen oberen Abschnitt (U) und einen unteren Abschnitt (L) unterteilt, und wobei der obere Abschnitt von der vorderen Stirnwand (28) weiter entfernt ist als der untere Abschnitt.

3. Vorrichtung nach Anspruch 1 oder 2, wobei der Sockel (68) einen Sockelblock (69) aufweist, der ein Paar gewinkelter Seitenblöcke (73) und einen Sockelrücken (71) stützt.

4. Vorrichtung nach einem der Ansprüche 1 bis 3, wobei sich die Öffnung (60) in einer Höhe von 30 bis 42 Zoll (76 bis 107 cm) oberhalb des Glaspegels befindet.

5. Vorrichtung nach einem der Ansprüche 1 bis 4 mit ferner einem Zuführmechanismus (48, 50), der die Glas-Charge (12) in einer Höhe von 4 bis 6 Zoll (10 bis 15 cm) oberhalb des Glaspegels (14) dem Behälter zuführt.

6. Vorrichtung nach Anspruch 5, wobei der Zuführmechanismus (48, 50) die Glas-Charge (12) dem ersten Bereich des Behälters (18) zuführt.

7. Vorrichtung nach einem der Ansprüche 1 bis 6, wobei die Deckenentlüftung (34) einen ersten Abschnitt (72), einen darüber angeordneten zweiten Abschnitt (74) und einen zwischen dem ersten und dem zweiten Abschnitt angeordneten, den zweiten Abschnitt unabhängig tragenden Stützring (76) aufweist, der .

8. Vorrichtung nach einem der Ansprüche 1 bis 7, wobei die Deckenentlüftung (34) eine Höhe von weniger als 3 Meter von der Decke (30) aus hat.

9. Vorrichtung nach Anspruch 8, wobei der Stützring (76) 253MA-Metall aufweist.

10. Vorrichtung nach einem der Ansprüche 7 bis 9, wobei die Deckenentlüftung (34) zusätzlich einen zwischen dem Stützring (76) und dem ersten Abschnitt angeordneten Ausdehnungsring (84) aufweist, der mit einem Fasermaterial gefüllt ist, um thermische Ausdehnung des ersten und zweiten Abschnitts in vertikaler Richtung zuzulassen.

## Revendications

1. Appareil pour la fusion d'un matériau de fabrication de verre, comprenant :
un récipient (18) destiné à contenir du verre en fusion (12) jusqu'à un niveau de verre (14), le récipient comprenant une paroi inférieure (20), une paroi d'extrémité arrière (26), une paroi d'extrémité avant (28) et des parois latérales (22,24) ;
des moyens comprenant un orifice (60) pour introduire du calcin et des débris de verre contenant des impuretés organiques dans le verre en fusion, dans une première zone du récipient adjacente à la paroi d'extrémité arrière, moyens qui comprennent également un plateau (68) positionné sur la paroi d'extrémité arrière et s'étendant horizontalement dans le récipient, au-dessous de l'orifice (60) et au-dessus du niveau de verre, pour contenir le calcin et les débris de verre introduits à travers l'orifice (60) ;
un déversoir (56) pour extraire du verre en fusion à partir d'une seconde zone du récipient adjacente à la paroi d'extrémité avant ;
au moins un brûleur combustible/oxygène (44) positionné dans une paroi latérale du récipient, au-dessus du niveau de verre, pour chauffer le matériau de fabrication de verre présent dans le récipient ;
une voûte (30) recouvrant le récipient et définissant un espace au-dessus du niveau de verre ; et
un évent de voûte (34) destiné à évacuer des gaz de combustion du brûleur combustible/oxygène hors de l'espace défini par la voûte, l'évent de la voûte étant orienté verticalement par rapport à celle-ci, dans la première zone du récipient,
pour qu'ainsi, en service, les gaz de combustion du brûleur combustible/oxygène traversent et, par conséquent, préchauffent le calcin et les débris de verre contenus dans le plateau tout en brûlant les impuretés organiques, avant d'être évacués par l'évent de la voûte.

2. Appareil selon la revendication 1, dans lequel le plateau (68) divise la paroi d'extrémité arrière (26) en une partie supérieure (U) et une partie inférieure (L), la partie supérieure étant située à une plus grande distance de la paroi d'extrémité avant (28) que la partie inférieure.

3. Appareil selon la revendication 1 ou la revendication 2, dans lequel le plateau (68) comprend un bloc de plateau (69) destiné à supporter deux blocs latéraux angulaires (73) et un dos de plateau (71).

4. Appareil selon l'une quelconque des revendications 1 à 3, dans lequel l'orifice (60) est situé à une hauteur de 30 à 42 pouces (76 à 107 cm) au-dessus du niveau de verre.

5. Appareil selon l'une quelconque des revendications 1 à 4, comprenant également un mécanisme d'alimentation (48,50) destiné à délivrer une composition de verre (12) dans le récipient à une hauteur de 4 à 6 pouces (10 à 15 cm) au-dessus du niveau de verre (14).

6. Appareil selon la revendication 5, dans lequel le mécanisme d'alimentation (48,50) délivre la composition de verre (12) dans la première zone du récipient (18).

7. Appareil selon l'une quelconque des revendications 1 à 6, dans lequel l'évent de voûte (34) comprend un premier tronçon (72), un second tronçon (74) disposé au-dessus du premier tronçon, et un collier de support (76) disposé entre les premier et second tronçons pour supporter le second tronçon de manière indépendante.

8. Appareil selon l'une quelconque des revendications 1 à 7, dans lequel l'évent de voûte (34) à une hauteur inférieure à 3 mètres à partir de la voûte (30).

9. Appareil selon la revendication 8, dans lequel le collier de support (76) comprend un métal 253MA.

10. Appareil selon l'une quelconque des revendications 7 à 9, dans lequel l'évent de voûte (34) comprend également une bague de dilatation (84) disposée entre le collier de support (76) et le premier tronçon, la bague de dilatation étant remplie d'une matière fibreuse pour permettre une dilatation thermique du premier tronçon et du second tronçon dans une direction verticale.
